# EUROPÄISCHE PATENTSCHRIFT

(11) **EP 1 530 758 B1**
(45) Veröffentlichungstag und Bekanntmachung des Hinweises auf die Patenterteilung: **25.01.2006**
(21) Anmeldenummer: 03790666.6
(22) Anmeldetag: 31.07.2003
(51) Int. Cl.: G06F 9/445, H04L 12/66

(54) **VERFAHREN ZUR BEREITSTELLUNG VON RESSOURCEN IN KOMMUNIKATIONS-NETZWERKEN**
METHOD FOR PROVIDING RESOURCES IN COMMUNICATION NETWORKS
PROCEDE D'ALLOCATION DE RESSOURCES DANS DES RESEAUX DE COMMUNICATION

(30) Priorität: 22.08.2002 DE 10238546
(43) Veröffentlichungstag der Anmeldung: 18.05.2005
(73) Patentinhaber: SIEMENS AKTIENGESELLSCHAFT, 80333 München (DE)
(72) Erfinder: NEUHAUS, Ralf, 44534 Lünen (DE); UECKER, Rainer, 45470 Mülheim an der Ruhr (DE)
(86) Internationale Anmeldenummer: PCT/DE2003/002578
(87) Internationale Veröffentlichungsnummer: WO 2004/021182

(56) Entgegenhaltungen:
- EP-A- 0 964 334
- WO-A-01/84792
- WO-A-98/36543
- GB-A- 2 346 989
- US-A- 5 752 042
- US-A- 5 761 380
- US-A- 6 023 727

## Beschreibung

Kommunikations-Netzwerke, deren Komponenten paketvermittelt miteinander kommunizieren, treten in verstärktem Maße an die Stelle leitungsvermittelnder Kommunikations-Netze. Solche Netzwerke werden häufig auch als Voice-over-IP (kurz VoIP) - Netzwerke bezeichnet, wenn zum Austausch der in Form von Daten vorliegenden akustischen Informationen das Internet-Protokoll (IP) verwendet wird. Dabei können die Netzwerke entweder ausschließlich zur Übertragung von Sprachdaten dienen oder aber gemischt sowohl Sprachdaten als auch andere Informationen übertragen.

Die in Kommunikations-Netzwerken angeordneten und miteinander verbundenen Geräte bezeichnet man allgemein als Kommunikations-Komponenten. Wenn eine solche Kommunikations-Komponente als Endgerät eingesetzt wird, beispielsweise als Telefon oder Multimedia-Terminal, so bezeichnet man diese Komponente auch als Client-Komponente. Andere Komponenten dienen nicht als Endgerät, sondern stellen im Kommunikations-Netzwerk Dienste zur Verfügung. Die Dienste können beispielsweise eine Gateway-Funktionalität, ein Voice-Mail-Server, ein Adressverzeichnis oder ähnliches sein. Solche Kommunikations-Komponenten werden auch als Server-Komponenten bezeichnet. Die von den Server-Komponenten zur Verfügung gestellten Dienste und Funktionen werden in der Literatur häufig als Ressourcen bezeichnet.

Sowohl die Client-Komponenten als auch die Server-Komponenten bestehen in der Regel aus einer Computer-Hardware (beispielsweise einem PC), die mit Hilfe entsprechender Hardware-Erweiterungen und einer angepassten Software entsprechende Funktionalitäten ausführen. Dabei kann auf einer Computer-Hardware auch mehr als eine Software-Anwendung installiert sein, so dass eine einzige physikalische Komponente im Netzwerk grundsätzlich sowohl Client- als auch Server-Funktionalitäten ausüben kann. Solche Kommunikations-Komponenten werden in der Literatur auch als Servents bezeichnet, ein Kunstwort, welches aus den Begriffen "Client" und "Server" abgeleitet ist.

Die Kommunikations-Komponenten treten miteinander in Verbindung, indem sie adressierte Datenpakete miteinander austauschen. Dabei besitzt jede Kommunikations-Komponente im paketvermittelnden Netzwerk eine Netzwerkadresse, die ihr eindeutig zugeordnet ist. In den Netzwerken, die Daten nach dem Internet-Protokoll austauschen (IP-Netze), ist dies beispielsweise die IP-Adresse und die IP-Portnummer. Soll eine Kommunikations-Komponente mit einer anderen Kommunikations-Komponente in Verbindung treten oder Daten austauschen, so muss zuvor die Netzwerk-Adresse der anderen Komponente in Erfahrung gebracht werden. Die Netzwerk-Adressen sind den Kommunikations-Komponenten zeitlich nicht immer fest zugeordnet, sondern können im Netzwerk auch dynamisch vergeben werden, wodurch Kommunikations-Komponenten nach jedem Aus- und Wiedereinschalten oder nach vorbestimmten Ereignissen jeweils eine andere Adresse haben können. Aus diesem Grund ist in den bekannten paketvermittelnden Kommunikations-Netzwerken mindestens eine Netzwerk-Komponente mit einem Adressverzeichnis (Adressdatenbank) aller in diesem Netzwerk verfügbaren Kommunikations-Komponenten ausgestattet. Diese Server-Komponenten werden in der Regel als Gatekeeper bezeichnet.

Bekannt ist aber auch der Datenaustausch ohne eine zentrale Adressdatenbank nach Art eines Gatekeepers, beispielsweise mit Hilfe des Verfahrens "The Gnutella Protocol Specification V 0.4", mit dem Kommunikations-Komponenten im Internet selbsttätig andere Kommunikations-Komponenten zum Dateienaustausch auffinden können. Der Dateien- und damit Datenaustausch findet dabei also nicht unter Zuhilfenahme einer zentralen Server-Komponente oder eines "Gatekeepers" statt, sondern erfolgt direkt zwischen den einzelnen Komponenten. Netzwerke, die ohne eine übergeordnete Instanz den direkten Datenaustausch zwischen Kommunikations-Komponenten vorsehen, nennt man Peer-to-Peer-Netze. Die Kommunikations-Komponenten, die Funktionalitäten sowohl von "Clients" als auch von "Servern" umfassen, sind die bereits oben erwähnten "Servents".

Im Peer-to-Peer-Netz nach der Gnutella-Spezifikation hält jede Kommunikations-Komponente (beispielsweise ein PC) Dateien zum Austausch mit anderen Komponenten bereit. Damit es zu einem Datenaustausch kommen kann, benötigt die suchende Komponente die Netzwerkadresse der Komponente, die die gesuchte Datei zum Abruf bereit hält. Dazu versendet sie zunächst eine erste Suchmeldung, das sogenannte "ping". Kommunikations-Komponenten, die eine "ping"-Suchmeldung erhalten, antworten der suchenden Kommunikations-Komponente mit einer Trefferantwort, dem sogenannten "pong". In dieser Trefferantwort ist jeweils die Netzwerkadresse der antwortenden Kommunikations-Komponente sowie die Anzahl der von dieser Komponente zum Austausch bereitgestellten Dateien enthalten. Im nächsten Schritt sendet die suchende Komponente eine zweite Suchmeldung "Query" an eine begrenzte Auswahl derjenigen Kommunikations-Komponenten, die die "ping"-Suchmeldung mit einem "pong" beantwortet haben. Die zweite Suchmeldung enthält bereits den Dateinamen der gesuchten Datei. Falls eine Komponente eine zweite Suchmeldung "Query" empfängt, die gesuchte Datei aber selbst nicht zum Austausch bereithält, so sendet sie diese Suchmeldung an andere Kommunikations-Komponenten im Netzwerk weiter, deren Adressen sie beispielsweise durch ein bereits in der Vergangenheit durchgeführtes "ping"-Verfahren ermittelt hat. Kann die Kommunikations-Komponente die gewünschte Datei jedoch zum Austausch bereitstellen, dann beantwortet sie die zweite Suchmeldung "Query" mit einer Trefferantwort "Query Hit", wodurch die suchende Kommunikations-Komponente die Datei-Übertragung mit Hilfe von im Internet-Protokoll definierten Befehlen initiieren kann.

Das Gnutella-Verfahren wird eingesetzt, wenn eine bestimmte Datei bei anderen Kommunikations-Komponenten gesucht wird. Das Suchverfahren ist genau dann beendet, sobald die gesuchte Datei erstmalig aufgefunden ist.

Während es bei der Suche nach dem Gnutella-Verfahren genügt, die richtige Datei einmal aufzufinden, ist es bei den Diensten in Kommunikationsnetzen - den Ressourcen - häufig wichtig, Zugriff auf mehrere Ressourcen vom gleichen Typ zu erlangen, um bei Bedarf zwischen diesen wählen zu können. Dieser Fall tritt beispielsweise häufig bei Gateways auf, die den Client-Komponenten im paketvermittelnden Netzwerk Verbindungen zu Komponenten in leitungsvermittelnden Kommunikationsnetzen zur Verfügung stellen. Hier benötigen die Client-Komponenten eines paketvermittelnden Kommunikationsnetzes die nutzungsrelevanten Informationen über mehrere Ressourcen dieses Typs, denn die Gateways unterstützen gemäß ihrer Kanalzahl zur gleichen Zeit immer nur eine begrenzte Anzahl von Kommunikationsverbindungen. Wenn also ein Gateway bereits voll ausgelastet oder ausgefallen ist, muss auf ein anderes Gateway ausgewichen werden können. Dazu sind in den Client-Komponenten oder an zentraler Stelle im Netzwerk Listen mit den Adressen mehrerer Gateways gespeichert. Auf der Suche nach einem freien, also noch nicht voll ausgelasteten Gateway kontaktiert eine Client-Komponente der Reihe nach alle Gateways, die auf der Liste verzeichnet sind, bis ein Gateway mit ausreichender (Rest-)Kapazität aufgefunden ist. Solche Listen mit den verfügbaren Ressourcen im Netzwerk werden von zentraler Stelle im Netzwerk aus administriert. Bei Änderungen der Netztopologie oder bei Änderungen bezüglich der verfügbaren Ressourcen wird die Liste geändert und anschließend aktualisiert den Client-Komponenten wieder zur Verfügung gestellt.

Die Ressourcen sind in den heute gebräuchlichen paketvermittelnden Kommunikations-Netzwerken meist Software-Anwendungen, die auf PC-Hardware ablaufen. Dabei können auch mehrere Ressourcen auf einer gemeinsamen PC-Hardware installiert sein. Die Software-Anwendungen greifen auf installierte Hardware-Komponenten des PC's zu. Beispielsweise werden ISDN-Karten für Verbindungen zum leitungsvermittelnden Kommunikations-Netz ISDN verwendet, Soundkarten dienen der Ein- und Ausgabe akustischer Informationen etc.. Sobald ein PC über die jeweiligen Hardware-Komponenten verfügt, kann er durch Installieren einer passenden Software die gewünschte Ressource im Netzwerk zur Nutzung durch die anderen Kommunikations-Komponenten des Kommunikations-Netzwerks bereitstellen.

Die Druckschrift EP 0 964 334 A2 McNally et al. "System, method and computer program product for resource discovery in a distributed computing environment" zeigt eine Anordnung und ein Verfahren zum Auffinden und zur Nutzung von Ressourcen in Computer-Netzwerken. Dabei werden in dem Computer-Netzwerk Suchprogramme ("Discovery Agents") versendet, die auf den Computern zur Ausführung gebracht werden und die auf diesen Computern nach Eigenschaften (Hardware, Software) suchen, die Voraussetzung für das Ablaufen bestimmter Software sind. Falls der jeweilige Computer aufgrund seiner-Eigenschaften die Voraussetzung für den Ablauf der entsprechenden Software bietet, wird diese Software zu dem Computer übertragen und dort zur Ausführung gebracht, so dass der Computer fortan die durch die Software gebildete Ressource in dem Computer-Netzwerk anbietet.

Bei den bekannten Kommunikationsnetzen hat sich als nachteilig erwiesen, dass Ressourcen nicht in der erforderlichen Anzahl im Netzwerk vorhanden sind. Das permanente Überwachen der Auslastung der verschiedenen Ressourcen-Typen, die zusätzliche Installation weiterer Ressourcen und die De-Installation überzähliger Ressourcen ist mit einem hohen, oft manuellen Aufwand verbunden.

Aufgabe der Erfindung ist es, die Bereitstellung von Ressourcen in Netzwerken zu optimieren und gleichzeitig den Aufwand zur Administration der Netzwerke zu verringern.

Die Lösung dieser Aufgabe ist für ein Verfahren durch die im Anspruch 1 angegebenen Merkmale gegeben.

Die Lösung dieser Aufgabe sieht vor, dass ein Dienst bei der Nutzung einer Ressource einer ersten Kommunikations-Komponente (D1) durch eine zweite Kommunikations-Komponente (A) diese zweite Kommunikations-Komponente (A) daraufhin überprüft, ob auch von dieser zweiten Kommunikations-Komponente (A) diese Ressource bereitgestellt werden kann, und dass bei einem positiven Überprüfungsergebnis die Übertragung dieser Software von der ersten Kommunikations-Komponente (D1) zur zweiten Kommunikations-Komponente (A) hin initiiert und die Ressource zur Nutzung bereitgestellt wird. Dadurch werden Ressourcen eines häufig benutzten Typs häufig kopiert und vermehrt im Netzwerk etabliert, wobei diese neu bereitgestellten Ressourcen bereits im Netzwerk vorhandene, aber bislang nicht eingesetzte Hardware nutzen. Nicht voll ausgelastete Kommunikations-Komponenten werden selbsttätig mit Software ausgestattet, so dass freie Kapazitäten sinnvoll genutzt werden können.

Durch die Merkmale der Unteransprüche ist die Erfindung in vorteilhafter Weise weiter ausgestaltet.

Die Überprüfung der Kommunikations-Komponente kann permanent als Hintergrundprozess erfolgen, wenn der Dienst als Software auf der zu überprüfenden Kommunikations-Komponente installiert ist.

Die Kommunikations-Komponenten werden nur mit tatsächlich verwendeten Ressourcen belegt, während die Software selten oder überhaupt nicht genutzter Ressourcen deaktiviert oder de-installiert wird und bei erneutem Bedarf wieder aktiviert oder neu-installiert wird. Dabei kann bestimmt werden, dass die letzte im Netzwerk vorhandene Instanz einer Ressource nicht de-installiert wird.

Die unkontrollierte Verbreitung nicht gewünschter Ressourcen wird vermieden, indem die Übertragung von Software in Abhängigkeit von Berechtigungen und/oder einer Limitierung erfolgt.

Wenn die Berechtigungen durch den Benutzer der die Software übertragenden Kommunikations-Komponente und/oder den Benutzer der die Software empfangenden Kommunikations-Komponente gegeben werden, entscheiden die Benutzer selbst über die Art der Verwendung der Kommunikations-Komponenten.

Die Beachtung von Lizensierungs-Grenzen und die Kontrolle der Anzahl der installierten Instanzen von Ressourcen ist möglich, indem die Limitierung durch eine vorgegebene maximale Anzahl von Software-Lizenzen an der zu übertragenden Software gegeben ist.

Der Dienst muss zur seiner Aktualisierung nur an einer Stelle im Kommunikations-Netz durch einen Benutzer aktualisiert werden, wenn der durch eine Software mit einem ersten Ausgabestand gebildete Dienst bei Auffinden eines zweiten gleichartigen Dienstes, der durch eine Software mit einem zweiten Ausgabestand gebildet wird, die Ausgabestände vergleicht und bei unterschiedlichen Ausgabeständen die Übertragung der Software mit aktuellerem Ausgabestand zur Kommunikations-Komponente mit der Software des älteren Ausgabestandes hin initiiert und dort die Software mit dem älteren Ausgabestand durch die übertragene Software aktualisiert.

Wenn die Überprüfung durch den Dienst selbsttätig in regelmäßigen zeitlichen Abständen und/oder bei jeder Nutzung einer Ressource und/oder nach manueller Aktivierung erfolgt, führen Änderungen in der Topologie oder Nutzung des Kommunikations-Netzwerks zeitnah und selbsttätig zur Anpassung der installierten Ressourcen.

Ein Ausführungsbeispiel eines erfindungsgemäßen Verfahrens zur Bereitstellung von Ressourcen in Kommunikations-Netzwerken wird nachfolgend anhand der Zeichnungen beschrieben.

Dabei zeigen:
Fig.1 ein mit einem leitungsvermittelnden Kommunikations-Netzwerk verbundenes paketvermittelndes Kommunikations-Netzwerk mit Kommunikations-Komponenten, und
Fig. 2 Kommunikations-Komponenten in einem paketvermittelnden Kommunikations-Netzwerk, die ressourcen-spezifische Software austauschen.

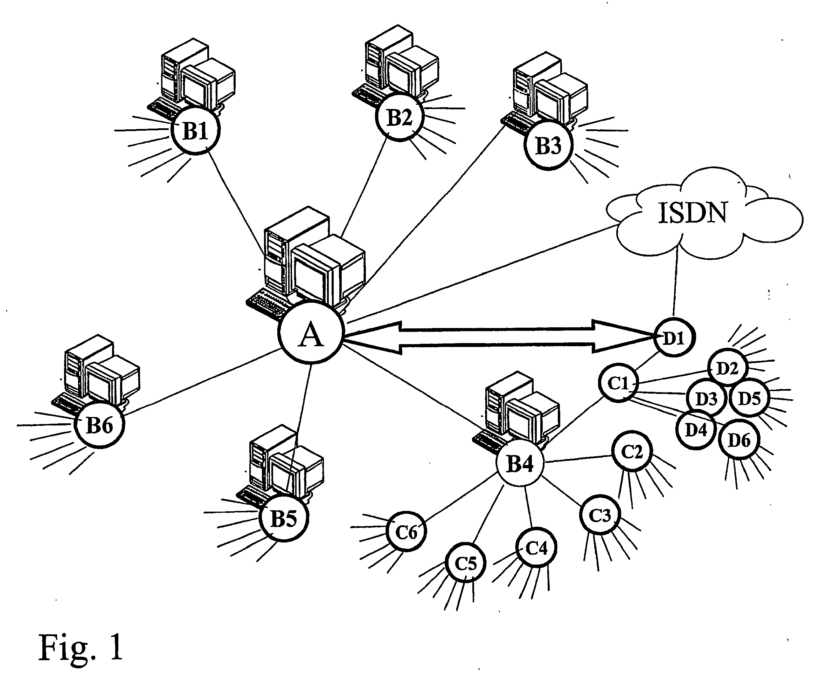

In Fig. 1 sind Kommunikations-Komponenten A, B1 - B6, C1 - C6, D1 - D6 dargestellt, die Teil eines paketvermittelnden Kommunikations-Netzwerkes sind. Die Verbindungslinien zwischen den Kommunikations-Komponenten zeigen exemplarisch den Weg, auf dem die einzelnen Kommunikations-Komponenten A, B1 - B6, C1 - C6, D1 - D6 Daten bzw. Datenpakete miteinander austauschen können. Der Datenaustausch geschieht dabei unabhängig von der physikalischen Topologie des Netzes (beispielsweise eine ring-, sternförmig oder beliebig vermaschte Vernetzung) direkt zwischen den Kommunikations-Komponenten A, B1 - B6, C1 - C6, D1 - D6. Die Kommunikations-Komponenten A, D1 verfügen als besondere Hardware-Ausstattung über - nicht dargestellte - ISDN-Karten, die Verbindungen zu einem leitungsvermittelnden Kommunikations-Netzwerk ISDN ermöglichen. Solche ISDN-Karten können beispielsweise dazu benutzt werden, um eine sogenannte Gateway-Funktionalität als Ressource bereitzustellen.

Die Kommunikations-Komponente D1 verfügt über eine Ressource des Typs Gateway. Diese Ressource ist gebildet aus einer speziellen Software - im weiteren als Gateway-Software bezeichnet - und der schon zuvor beschriebenen und in der Kommunikations-Komponente D1 installierten ISDN-Karte. Diese ISDN-Karte stellt physikalisch die Verbindung zum leitungsvermittelnden Kommunikations-Netzwerk ISDN her. Dazu wird die ISDN-Karte von der Gateway-Software angesteuert.

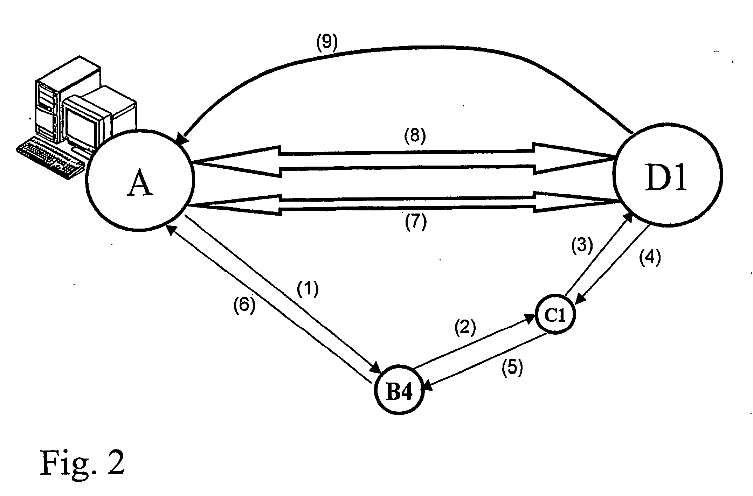

In Fig. 2 ist der Ablauf zur Nutzung des auf der Kommunikations-Komponente D1 installierten Gateways durch die Kommunikations-Komponente A beschrieben. Die den Verbindungslinien und -pfeilen zugeordneten und im Folgenden an den entsprechenden Textstellen aufgeführten Zahlen (1) bis (9) bezeichnen dabei aufeinanderfolgende Verfahrensschritte.

Die Kommunikations-Komponente A sucht im paketvermittelnden Kommunikations-Netzwerk eine Kommunikations-Komponente, die als Ressource ein Gateway zum leitungsvermittelnden Kommunikations-Netzwerk ISDN zur Verfügung stellen kann. Dazu versendet die Kommunikations-Komponente A eine Suchmeldung an eine ihr bekannte "benachbarte" Kommunikations-Komponente B4 (1). Diese Suchmeldung umfasst neben der eigenen Netzwerk-Adresse der Kommunikations-Komponente A die Information, dass ein Gateway für eine Sprachverbindung zum leitungsvermittelnden Kommunikations-Netzwerk ISDN gesucht wird. Die diese Suchmeldung empfangende Kommunikations-Komponente B4 verfügt nicht über eine passende Ressource des Typs "Gateway". Deshalb leitet die Kommunikations-Komponente B4 die Suchmeldung, erweitert um die eigene Netzwerk-Adresse, an die ihr bekannte "benachbarte" Kommunikations-Komponenten C1 - C6 weiter (2). Da auch die Kommunikations-Komponente C1 die gewünschte Ressource vom Typ "Gateway" nicht bereitstellen kann, sendet sie ihrerseits die Suchmeldung unter Hinzufügen ihrer eigenen Netzwerk-Adresse an die Kommunikations-Komponenten D1 - D6 weiter (3).

Die Kommunikations-Komponente D1 verfügt über die gewünschte Ressource des Typs "Gateway" und antwortet der Kommunikations-Komponente C1 mit einer Trefferantwort (4). Diese Trefferantwort umfasst die Netzwerk-Adresse der Kommunikations-Komponente D1 sowie die Bandbreite, den Typ und die Anzahl der freien Kanäle des angebotenen Gateways. Die Kommunikations-Komponente C1 leitet die Trefferantwort zur Kommunikations-Komponente B4 weiter (5). Die Kommunikations-Komponente B4 übermittelt die Trefferantwort schließlich zur suchenden Kommunikations-Komponente A (6).

Mit den so gewonnenen Informationen über das verfügbare Gateway baut die Kommunikations-Komponente A eine direkte Datenverbindung zur Kommunikations-Komponente D1 auf (7). Wenn bei einer Suche mehrere Gateways gefunden werden, wird anhand der übermittelten Informationen eines dieser Gateways ausgewählt.

Bei dem paketvermittelnden Kommunikations-Netzwerk handelt es sich um ein Netzwerk, welches nach dem Internet-Protokoll arbeitet. Hier ist beispielsweise das Protokoll H.323 zum Aufbau und zur Durchführung von Sprachverbindungen gebräuchlich. Mit Hilfe der im Protokoll H.323 vorhandenen Protokollelemente wird die zuvor beschriebene Verbindung zwischen den Kommunikations-Komponente A und D1 aufgebaut. Alternativ können natürlich auch andere Protokolle, beispielsweise das SIP-Protokoll (Session Initiation Protokoll) verwendet werden. Nach Aufbau der Verbindung werden die eigentlichen Nutzdaten, hier also die Sprachdaten, von der Kommunikations-Komponente A zur Kommunikations-Komponente D1 und dort unter Verwendung des Gateways zu einem Teilnehmer im leitungsvermittelnden Kommunikations-Netzwerk ISDN übertragen (8).

Nachdem die Kommunikations-Komponente A jetzt die Information darüber hat, dass eine von ihr benötigte Ressource, nämlich ein Gateway, von der Kommunikations-Komponente D1 zur Verfügung gestellt wird, fragt sie von dieser Kommunikations-Komponente D1 mit einer speziellen Abfragemeldung die Informationen darüber ab, welche Hardware-Voraussetzungen zum Betrieb der in der Kommunikations-Komponente D1 verwendeten Gateway-Software notwendig sind. Diese Abfrage wird von einem auf der Kommunikations-Komponente A installierten und im Hintergrund permanent aktiven Dienst initiiert. Die Kommunikations-Komponente D1 antwortet mit der Angabe, dass eine ISDN-Karte mit einem CAPI-Treiber (CAPI = Common Application Programming Interface - genormte Anwendungsschnittstelle für ISDN-Kommunikationsadapter) installiert sein muss. Der Dienst vergleicht die auf der Kommunikations-Komponente A installierte Hardware bzw. deren Anwendungsschnittstellen mit diesen Angaben und stellt fest, dass die Mindestvoraussetzungen zum Ablauf der auf der Kommunikations-Komponente D1 verwendeten Gateway-Software von der Hardware der Kommunikations-Komponente A ebenfalls erfüllt werden.

Die Software-Übertragung hat zur Folge, dass eine Kopie der Software erstellt wird. Die dazu notwendige Berechtigung wird überprüft, indem aus einer Berechtigungs-Datei der Kommunikations-Komponente D1 die Information ausgelesen wird, welche der Kommunikations-Komponenten A, B1 - B6, C1 - C6, D2 - D6 zur Software-Übertragung prinzipiell berechtigt sind. Das sind im vorliegenden Fall alle Kommunikations-Komponenten A, B1 - B6, C1 - C6, D1 - D6, die der gleichen Domäne zugeordnet sind. Zusätzlich wird bei einem - nicht dargestellten - Lizenz-Server, der als Ressource auf der Kommunikations-Komponente B6 installiert ist, die Anzahl der noch freien Lizenzen für die Gateway-Software abgefragt. Voraussetzung für die Berechtigung ist mindestens eine freie Lizenz. Nach der Software-Übertragung wird die Zahl der freien Lizenzen um eins verringert. Die Information zur Berechtigung der Software-Übertragung ist durch den Benutzer der Kommunikations-Komponente D1 administrierbar.

Nachdem sowohl die technischen als auch die lizenzbedingten Voraussetzungen erfüllt sind, initiiert der Dienst die Übertragung der Gateway-Software von der Kommunikations-Komponente D1 zur Kommunikations-Komponente A hin (9). Die übertragene Gateway-Software wird gestartet, wodurch die Ressource "Gateway" nun auch von der Kommunikations-Komponente A zur Verfügung gestellt wird.

Der Dienst fragt in regelmäßigen Zeitabständen - in diesem Beispiel einmal am Tag - bei den anderen im Kommunikations-Netzwerk aufgefundenen Kommunikations-Komponenten B1 - B6, C1 - C6, D1 - D6 ab, ob auf diesen der gleiche Dienst installiert ist. Falls dies der Fall ist, erhält der Dienst von jeder anderen Kommunikations-Komponente B1 - B6, C1 - C6, D1 - D6 mit diesem gleichen Dienst eine Antwortmeldung, die als Information über den Ausgabestand der Software, die den Dienst der anderen Kommunikations-Komponente B1 - B6, C1 - C6, D1 - D6 jeweils bildet, eine Versions-Nummer umfasst. Der diese Antwortmeldungen empfangende Dienst vergleicht die Versions-Nummern mit seiner eigenen Versions-Nummer. Falls ein Dienst der anderen Kommunikations-Komponenten B1 - B6, C1 - C6, D1 - D6 einen neueren Software-Ausgabestand aufweist, initiiert der Dienst die Übertragung der aktuellsten aufgefundenen Software zur eigenen Kommunikations-Komponente A hin und ersetzt damit die eigene Software. In Fällen, in denen ein Dienst der anderen Kommunikations-Komponenten B1 - B6, C1 - C6, D1 - D6 einen älteren Software-Ausgabestand aufweist, initiiert der Dienst die Übertragung der eigenen Software zur anderen Kommunikations-Komponente B1 - B6, C1 - C6, D1 - D6 hin, so dass die altere Software ersetzt wird. Die auf der Kommunikations-Komponente A installierte Gateway-Software registriert jede Nutzung der Ressource. Dies geschieht durch das Führen einer Protokoll-Datei. Die Protokoll-Datei wird regelmäßig durch den Dienst ausgewertet. Wenn die Ressource eine längere Zeit lang nicht benutzt wurde - das Zeit-Limit beträgt hier eine Woche -, wird die Gateway-Software durch den Dienst de-installiert. Dadurch wird wieder Speicherplatz für andere installierbare Ressourcen frei.

## Patentansprüche

1. Verfahren zur Bereitstellung von Ressourcen in Kommunikations-Netzwerken,
mit Kommunikations-Komponenten (A, B1 - B6, C1 - C6, D1 - D6), die Ressourcen im Netzwerk nutzen und/oder die Ressourcen im Netzwerk zur Nutzung bereitstellen,
wobei die Ressourcen durch eine auf den Kommunikations-Komponenten (A, B1 - B6, C1 - C6, D1 - D6) ablaufende Software bereitgestellt werden, und
wobei die Software auf die Hardware der Kommunikations-Komponenten (A, B1 - B6, C1 - C6, D1 - D6) zugreift,
**dadurch gekennzeichnet,**
**dass** ein Dienst bei der Nutzung einer Ressource einer ersten Kommunikations-Komponente (D1) durch eine zweite Kommunikations-Komponente (A) diese zweite Kommunikations-Komponente (A) daraufhin überprüft, ob auch von dieser zweiten Kommunikations-Komponente (A) diese Ressource bereitgestellt werden kann, und
**dass** bei einem positiven Überprüfungsergebnis die Übertragung dieser Software von der ersten Kommunikations-Komponente (D1) zur zweiten Kommunikations-Komponente (A) hin initiiert und
die Ressource zur Nutzung bereitgestellt wird.

2. Verfahren nach Anspruch 1,
**dadurch gekennzeichnet,**
**dass** der Dienst als Software auf der zu überprüfenden Kommunikations-Komponente (A, B1 - B6, C1 - C6, D1 - D6) installiert ist.

3. Verfahren nach einem der vorhergehenden Ansprüche,
**dadurch gekennzeichnet,**
**dass** die Software selten oder überhaupt nicht genutzter Ressourcen deaktiviert oder de-installiert wird und bei erneutem Bedarf wieder aktiviert oder neu-installiert wird.

4. Verfahren nach einem der vorhergehenden Ansprüche,
**dadurch gekennzeichnet,**
**dass** die Übertragung von Software in Abhängigkeit von Berechtigungen und/oder einer Limitierung erfolgt.

5. Verfahren nach Anspruch 4,
**dadurch gekennzeichnet,**
**dass** die Berechtigungen durch den Benutzer der die Software übertragenden Kommunikations-Komponente (D1) und/oder den Benutzer der die Software empfangenden Kommunikations-Komponente (A) gegeben werden.

6. Verfahren nach Anspruch 4 oder 5,
**dadurch gekennzeichnet,**
**dass** die Limitierung durch eine vorgegebene maximale Anzahl von Software-Lizenzen an der zu übertragenden Software gegeben ist.

7. Verfahren nach einem der vorhergehenden Ansprüche,
**dadurch gekennzeichnet,**
**dass** der durch eine Software mit einem ersten Ausgabestand gebildete Dienst bei Auffinden eines zweiten gleichartigen Dienstes, der durch eine Software mit einem zweiten Ausgabestand gebildet wird, die Ausgabestände vergleicht und bei unterschiedlichen Ausgabeständen die Übertragung der Software mit aktuellerem Ausgabestand zur Kommunikations-Komponente (A, B1 - B6, C1 - C6, D1 - D6) mit der Software des älteren Ausgabestandes hin initiiert und dort die Software mit dem älteren Ausgabestand durch die übertragene Software aktualisiert.

8. Verfahren nach einem der vorhergehenden Ansprüche,
**dadurch gekennzeichnet,**
**dass** die Überprüfung durch den Dienst selbsttätig in regelmäßigen zeitlichen Abständen und/oder bei jeder Nutzung einer Ressource und/oder nach manueller Aktivierung erfolgt.

## Revendications

1. Procédé de mise à disposition de ressources dans des réseaux de communication,
avec des composants de communication (A, B1 à B6, C1 à C6, D1 à D6) qui utilisent des ressources dans le réseau et/ou qui mettent à disposition des ressources dans le réseau en vue d'une utilisation,
les ressources étant mises à disposition par un logiciel s'exécutant sur les composants de communication (A, B1 à B6, C1 à C6, D1 à D6), et
le logiciel accédant au matériel des composants de communication (A, B1 à B6, C1 à C6, D1 à D6),
**caractérisé par le fait que**
lors de l'utilisation d'une ressource d'un premier composant de communication (D1) par un deuxième composant de communication (A), un service vérifie ce deuxième composant de communication (A) pour savoir si cette ressource peut aussi être mise à disposition par ce deuxième composant de communication (A), et
lors d'un résultat de vérification positif, la transmission de ce logiciel du premier composant de communication (D1) au deuxième composant de communication (A) est déclenchée et la ressource est mise à disposition en vue d'une utilisation.

2. Procédé selon la revendication 1,
**caractérisé par le fait que** le service est installé comme logiciel sur le composant de communication (A, B1 à B6, C1 à C6, D1 à D6) à vérifier.

3. Procédé selon l'une des revendications précédentes,
**caractérisé par le fait que** le logiciel de ressources rarement ou même jamais utilisées est désactivé ou désinstallé et, en cas de nouveau besoin, est à nouveau activé ou à nouveau installé.

4. Procédé selon l'une des revendications précédentes,
**caractérisé par le fait que** la transmission de logiciel s'effectue en fonction d'autorisations et/ou d'une limitation.

5. Procédé selon la revendication 4,
**caractérisé par le fait que** les autorisations sont données par l'utilisateur du composant de communication (D1) transmettant le logiciel et/ou par l'utilisateur du composant de communication (A) recevant le logiciel.

6. Procédé selon la revendication 4 ou 5,
**caractérisé par le fait que** la limitation est donnée par un nombre maximal prédéfini de licences de logiciel pour le logiciel à transmettre.

7. Procédé selon l'une des revendications précédentes,
**caractérisé par le fait que** le service formé par un logiciel ayant un premier numéro d'édition compare, en présence d'un deuxième service du même type qui est formé par un logiciel ayant un deuxième numéro d'édition, les numéros d'édition et, si les numéros d'édition sont différents, il déclenche la transmission du logiciel ayant le numéro d'édition le plus récent vers le composant de communication (A, B1 à B6, C1 à C6, D1 à D6) contenant le logiciel ayant le numéro d'édition antérieur et, là, il remplace le logiciel ayant le numéro d'édition antérieur par le logiciel transmis.

8. Procédé selon l'une des revendications précédentes,
**caractérisé par le fait que** la vérification par le service s'effectue automatiquement à intervalles de temps réguliers et/ou à chaque utilisation d'une ressource et/ou après activation manuelle.

## Claims

1. Method for providing resources in communication networks, having communication components (A, B1 - B6, C1 - C6, D1 - D6) which use resources in the network and/or which provide resources in the network for use,
where the resources are provided by a piece of software running on the communication components (A, B1 - B6, C1 - C6, D1 - D6), and
where the software accesses the hardware of the communication components (A, B1 - B6, C1 - C6, D1 - D6),
**characterized**
**in that** a service, upon use of a resource on a first communication component (D1) by a second communication component (A), checks this second communication component (A) for whether this second communication component (A) can also provide this resource, and
**in that** if the result of the check is positive it initiates the transfer of this software from the first communication component (D1) to the second communication component (A) and provides the resource for use.

2. Method according to Claim 1,
**characterized**
**in that** the service is installed as software on the communication component (A, B1 - B6, C1 - C6, D1 - D6) which is to be checked.

3. Method according to one of the preceding claims,
**characterized**
**in that** the software for resources which are used rarely or not at all is deactivated or uninstalled and is reactivated or reinstalled when needed again.

4. Method according to one of the preceding claims,
**characterized**
**in that** software is transferred on the basis of authorizations and/or limiting.

5. Method according to Claim 4,
**characterized**
**in that** the authorizations are provided by the user of the communication component (D1) which transfers the software and/or by the user of the communication component (A) which receives the software.

6. Method according to Claim 4 or 5,
**characterized**
**in that** the limiting is provided by a prescribed maximum number of software licences on the software which is to be transferred.

7. Method according to one of the preceding claims,
**characterized**
**in that** the service formed by a piece of software with a first release compares the release upon finding a second service of the same type which is formed by a piece of software with a second release and, if the releases are different, initiates the transfer of the software with the more up-to-date release to the communication component (A, B1 - B6, C1 - C6, D1 - D6) having the software with the earlier release and uses the transferred software to update the software with the earlier release there.

8. Method according to one of the preceding claims,
**characterized**
**in that** the service forms the check automatically at regular intervals of time and/or whenever a resource is used and/or after manual activation.
